# EUROPEAN PATENT APPLICATION

(11) **EP 4 624 631 A1**
(43) Date of publication of application: **01.10.2025**
(21) Application number: 24766831.2
(22) Date of filing: 16.02.2024
(51) Int. Cl.: C25B 9/00, C25B 1/04, C25B 11/031, C25B 15/08

(54) **ELECTROLYSIS CELL AND ELECTROLYSIS APPARATUS**

(30) Priority: 03.03.2023 JP 2023032471
(71) Applicant: Mitsubishi Heavy Industries, Ltd., Tokyo 100-8332 (JP)
(72) Inventor: FURUKAWA Shoichi, Tokyo 100-8332 (JP); TAGAMI Naoto, Tokyo 100-8332 (JP); TAJIMA Hidehiko, Tokyo 100-8332 (JP); INABA Kosuke, Tokyo 100-8332 (JP); TSURUMAKI Shigeru, Tokyo 100-8332 (JP); MUKAI Daisuke, Tokyo 100-8332 (JP); TSUKAMOTO Daisuke, Tokyo 100-8332 (JP); SUKENOBU Takahiro, Tokyo 100-8332 (JP); MIYOSHI Takahito, Tokyo 100-8332 (JP)
(74) Representative: Studio Torta S.p.A.
(86) International application number: PCT/JP2024/005462
(87) International publication number: WO 2024/185460

(57) **Abstract**

An electrolytic cell of the present disclosure includes a first separator, a second separator, an anion exchange membrane disposed between the first separator and a second separator, a cathode disposed between the first separator and the anion exchange membrane, and an anode disposed between the second separator and the anion exchange membrane. The first separator includes a flow path for supplying an electrolyte to the cathode, and at the cathode, at least part of the electrolyte supplied from the flow path is consumed to generate hydrogen and hydroxide ions. The second separator does not include a flow path for supplying the electrolyte to the anode, and at the anode, oxygen and water are generated by the hydroxide ions that have passed through the anion exchange membrane from the cathode in a state where the electrolyte is not supplied.

## Description

### Technical Field

The present disclosure relates to an electrolytic cell and an electrolyzer.

This application claims priority based on JP 2023-32471 filed on March 3, 2023, contents of which are incorporated herein by reference.

### Background Art

Patent Document 1 discloses a polymer electrolyte membrane (PEM) type electrolyzer in which a current flows between both surfaces of an electrolytic membrane including a solid polymer membrane including a catalyst layer provided on a surface thereof. This electrolyzer produces oxygen by supplying water to a cathode side of the electrolytic membrane while controlling a pressure difference between the both surfaces of the electrolytic membrane.

In the PEM type electrolyzer, when a voltage is applied between the anode and the cathode, on the anode side, the following chemical reaction occurs, and the water is consumed and oxygen is generated.

2H₂O → 4H⁺ + 4e⁻ + O₂

In addition, on a cathode side, the following chemical reaction occurs, and hydrogen is generated from the electrolyte.

4H⁺ + 4e⁻ → 2H₂

### Citation List

### Patent Literature

Patent Document 1: JP 6332792 B

### Summary of Invention

### Problems to be Solved by the Invention

However, in the PEM type water electrolyzer described in Patent Document 1, the water is consumed on the anode side, but the water is supplied only to the cathode side. Thus, the water supplied to the cathode side moves to the anode side through the electrolytic membrane and is subjected to the chemical reaction, and protons (H⁺) generated by the chemical reaction move to the cathode side again, and hydrogen is generated. At this time, resistance exists in the process in which the water or the protons pass through the electrolytic membrane. Thus, in the above configuration, it is difficult to improve an electrolytic performance.

The present disclosure is made to solve the problem described above, and an object of the present disclosure is to provide an electrolytic cell and an electrolyzer that can improve the electrolytic performance.

### Solution to Problem

In order to solve the problem described above, an electrolytic cell according to the present disclosure includes a first separator, a second separator, an anion exchange membrane disposed between the first separator and the second separator, a cathode disposed between the first separator and the anion exchange membrane, and an anode disposed between the second separator and the anion exchange membrane, in which the first separator includes a flow path for supplying an electrolyte to the cathode, and at the cathode, at least part of the electrolyte supplied from the flow path is consumed to generate hydrogen and hydroxide ions, and the second separator does not include a flow path for supplying the electrolyte to the anode, and at the anode, oxygen and water are generated by the hydroxide ions that have passed through the anion exchange membrane from the cathode in a state where the electrolyte is not supplied.

The electrolyzer according to the present disclosure includes an electrolytic cell, an electrolyte supply unit for supplying an electrolyte to the electrolytic cell and a power supply unit for applying a voltage to the electrolytic cell.

An electrolytic cell according to the present disclosure includes a first separator, a second separator, an ion exchange membrane disposed between the first separator and the second separator, a cathode disposed between the first separator and the ion exchange membrane, an anode disposed between the second separator and the ion exchange membrane, in which the first separator includes a flow path for supplying an electrolyte to the cathode, the second separator does not include a flow path for supplying the electrolyte to the anode, and includes a gas discharge port through which gas generated at the anode is mainly discharged and a liquid discharge port through which liquid generated at the anode is mainly discharged, and the gas discharge port and the liquid discharge port are separately provided in the second separator.

### Advantageous Effects of Invention

According to the electrolytic cell and the electrolyzer of the present disclosure, the electrolytic performance can be improved.

### Brief Description of Drawings

FIG. 1 is a schematic configuration diagram illustrating an overall configuration of an electrolyzer according to a first embodiment of the present disclosure.
FIG. 2 is a cross-sectional view schematically illustrating an electrolytic cell according to the first embodiment of the present disclosure.
FIG. 3 is a cross-sectional view of the electrolytic cell illustrated in FIG. 2 taken along an F3-F3 line.
FIG. 4 is an exploded perspective view illustrating the electrolytic cell according to the first embodiment of the present disclosure.
FIG. 5 is a cross-sectional view illustrating the electrolytic cell according to the first embodiment of the present disclosure.
FIG. 6 is a diagram for explaining an operation of the electrolytic cell according to the first embodiment of the present disclosure.
FIG. 7 is a diagram for explaining the operation of the electrolytic cell according to the first embodiment of the present disclosure.
FIG. 8 is a diagram for explaining the operation of the electrolytic cell according to the first embodiment of the present disclosure.
FIG. 9 is a cross-sectional view illustrating an electrolytic cell according to a modification example of the first embodiment of the present disclosure.
FIG. 10 is a cross-sectional view illustrating an electrolytic cell according to a second embodiment of the present disclosure.
FIG. 11 is a cross-sectional view illustrating an electrolytic cell according to a third embodiment of the present disclosure.

### Description of Embodiments

Electrolytic cells and electrolyzers according to embodiments of the present disclosure will be described below with reference to the accompanying drawings. In the following description, configurations having the same or similar functions are denoted by the same reference signs. In the present disclosure, "facing" means that two members overlap each other when viewed in a certain direction, and may include a case where another member is present between the two members.

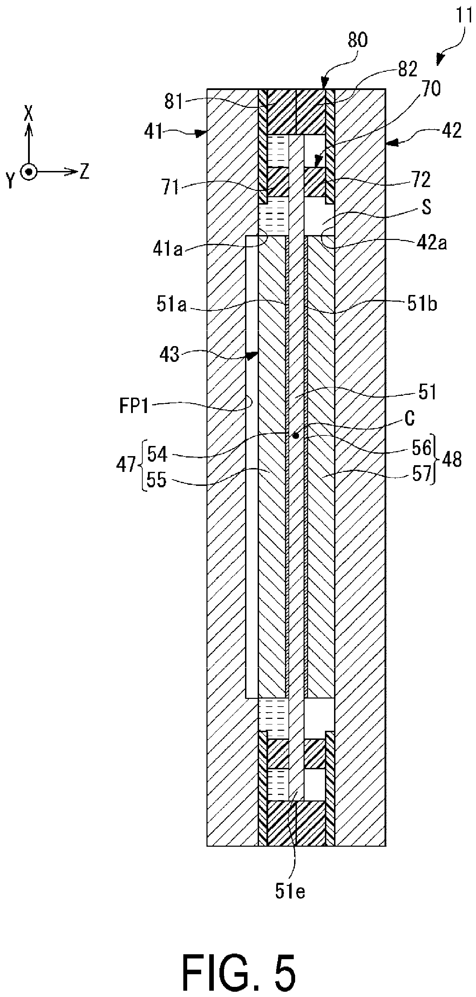

First, referring to FIG. 5, a Z direction, an X direction, and a Y direction are defined. The Z direction is a direction from a first separator 41 toward a second separator 42 to be described below. The X direction is a direction intersecting (for example, orthogonal to) the Z direction and is a direction from a central portion C of a membrane electrode assembly 43 to be described below toward one end portion of the membrane electrode assembly 43. The Y direction is a direction intersecting (for example, orthogonal to) the Z direction and the X direction and is, for example, the depth direction in FIG. 5. In the present embodiment, the Z direction and the Y direction are directions orthogonal to a horizontal plane. The X direction is a vertical direction. In the present disclosure, "outer size" means an outer size when viewed in the Z direction.

### First Embodiment

### 1. Configuration of Electrolyzer

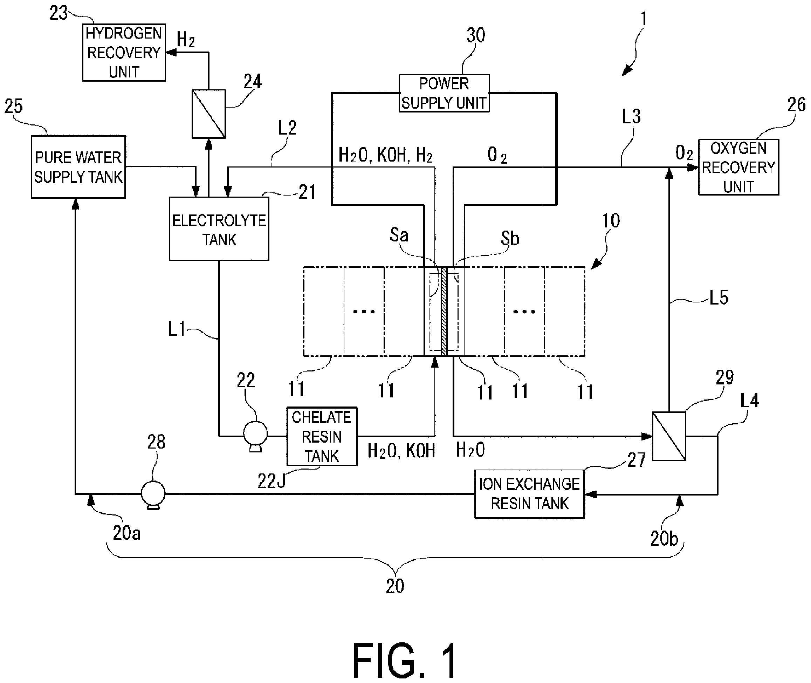

FIG. 1 is a schematic configuration diagram illustrating an overall configuration of an electrolyzer 1 according to a first embodiment. The electrolyzer 1 is, for example, a device that generates hydrogen by electrolyzing water contained in an electrolyte. The electrolyzer 1 is, for example, an electrolyzer of an anion exchange membrane (AEM) type. The electrolyzer 1 includes, for example, an electrolytic cell stack 10, an electrolyte supply unit 20, and a power supply unit 30.

### Electrolytic Cell Stack

The electrolytic cell stack 10 is an aggregate of a plurality of electrolytic cells 11. For example, the electrolytic cell stack 10 is formed by arranging the plurality of electrolytic cells 11 in one direction. Each electrolytic cell 11 includes a cathode chamber Sa and an anode chamber Sb. The electrolytic cell 11 will be described in detail below.

### Electrolyte Supply Unit

The electrolyte supply unit 20 is a supply unit that supplies electrolyte to each electrolytic cell 11. The electrolyte is, for example, pure water or an alkaline aqueous solution. In the present embodiment, for example, a potassium hydroxide aqueous solution (KOH) is used as the electrolyte. The electrolyte supply unit 20 includes a cathode-side supply unit 20a and an anode-side recovery unit 20b.

The cathode-side supply unit 20a supplies the electrolyte to the cathode chamber Sa of each electrolytic cell 11. The cathode-side supply unit 20a includes, for example, an electrolyte tank 21, a first pump 22, a hydrogen recovery unit 23, a hydrogen gas-liquid separator 24, a pure water supply tank 25, and pipelines L1 and L2.

The electrolyte tank 21 stores the electrolyte. A supply port of the electrolyte tank 21 is connected to the cathode chamber Sa of the electrolytic cell 11 via the pipeline L1. The first pump 22 is provided in the middle of the pipeline L1 and feeds the electrolyte stored in the electrolyte tank 21 toward the cathode chamber Sa of the electrolytic cell 11.

In the electrolyte fed to the cathode chamber Sa by the first pump 22, at least part of impurity ions may be removed by a chelate resin tank 22J provided in the pipeline L1. The chelate resin tank 22J contains a chelate resin for removing the impurity ions. The chelate resin tank 22J removes at least part of impurity ions (for example, metal ions) eluted from the electrolytic cell 11 or the pipelines L1 and L2 into the electrolyte (for example, a potassium hydroxide aqueous solution).

A return port of the electrolyte tank 21 is connected to the cathode chamber Sa of the electrolytic cell 11 via the pipeline L2. The electrolyte containing hydrogen generated in the electrolytic cell 11 flows into the electrolyte tank 21 from the electrolytic cell 11. The electrolyte tank 21 is connected to the hydrogen gas-liquid separator 24 that separates the hydrogen contained in the electrolyte. The hydrogen separated from the electrolyte by the hydrogen gas-liquid separator 24 is recovered by the hydrogen recovery unit 23. The pure water supply tank 25 lowers the pH of the electrolyte (lowers the hydroxide ion concentration) by supplying pure water to the electrolyte tank 21 in a case where the pH of the electrolyte rises (in a case where the hydroxide ion concentration rises) as s water electrolysis treatment progresses.

On the other hand, the anode-side recovery unit 20b recovers water and oxygen from the anode chamber Sb of each electrolytic cell 11. The anode-side recovery unit 20b includes, for example, an oxygen recovery unit 26, an ion exchange resin tank 27, a second pump 28, an oxygen gas-liquid separator 29, and pipelines L3 and L4.

The oxygen recovery unit 26 is connected to the anode chamber Sb of the electrolytic cell 11 via the pipeline L3. Oxygen generated in the electrolytic cell 11 flows into the oxygen recovery unit 26 from the electrolytic cell 11.

The ion exchange resin tank 27 is connected to the anode chamber Sb of the electrolytic cell 11 via the pipeline L4. Water generated in the electrolytic cell 11 flows into the ion exchange resin tank 27 from the electrolytic cell 11. The ion exchange resin tank 27 removes at least part of ions contained in the water flowing from the electrolytic cell 11. That is, the ion exchange resin tank 27 includes an ion exchange resin for removing the impurity ions. The ion exchange resin tank 27 removes at least part of impurity ions (for example, metal ions or chlorine ions) eluted into the water from the electrolytic cell 11 or the pipeline L4. The second pump 28 is provided in the middle of the pipeline L4 and feeds the water generated in the electrolytic cell 11 toward the pure water supply tank 25. In the present embodiment, since the liquid flowing through the pipeline L4 is not an alkaline aqueous solution but the pure water, the ion exchange resin tank 27 can be disposed instead of the chelate resin tank.

The oxygen gas-liquid separator 29 separates the oxygen contained in the water generated in the electrolytic cell 11. The oxygen gas-liquid separator 29 is provided, for example, in the middle of the pipeline L4. In the present embodiment, the oxygen gas-liquid separator 29 is provided, for example, on the upstream side of the ion exchange resin tank 27 in the water flow direction in the pipeline L4. The water separated by the oxygen gas-liquid separator 29 passes through the ion exchange resin tank 27 and is fed to the pure water supply tank 25 through the pipeline L4 by the second pump 28. The pipeline L4 is a pipeline for guiding the water that has passed through the ion exchange resin tank 27 so as to be merged with the electrolyte to be supplied to a cathode 47 of the electrolytic cell 11. On the other hand, the oxygen separated by the oxygen gas-liquid separator 29 is fed to the oxygen recovery unit 26 through a connection line L5 connected in the middle of the pipeline L4. That is, the oxygen gas-liquid separator 29 separates the oxygen contained in the water discharged from a liquid discharge port 42h, and merges the separated oxygen with the oxygen discharged from a gas discharge port 42g.

### Power Supply Unit

The power supply unit 30 is a DC power supply apparatus that applies a voltage to the electrolytic cell 11. The power supply unit 30 applies a DC voltage required for electrolyzing the electrolyte between an anode and a cathode of the electrolytic cell 11.

### 2. Configuration of Electrolytic Cell

### 2.1 Basic Structure of Electrolytic Cell

Next, the electrolytic cell 11 will be described in detail.

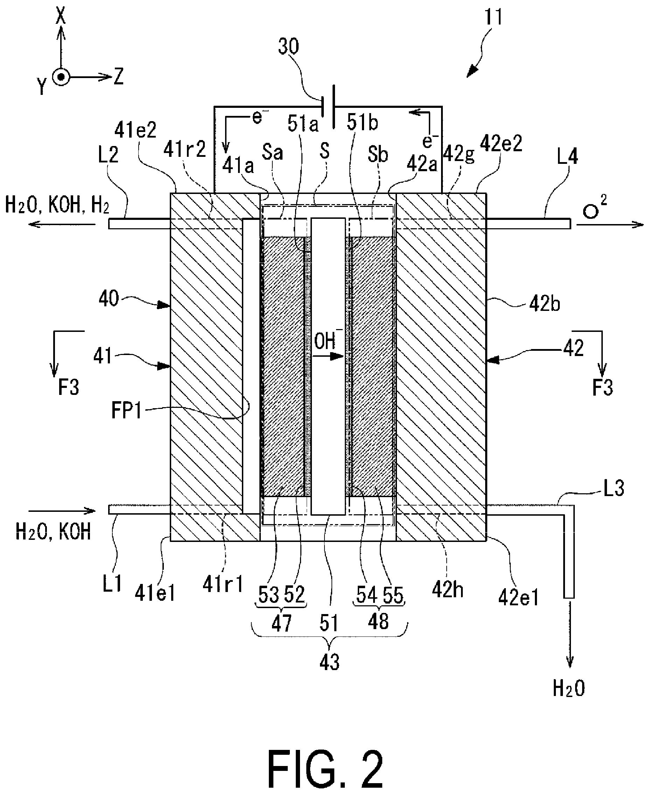

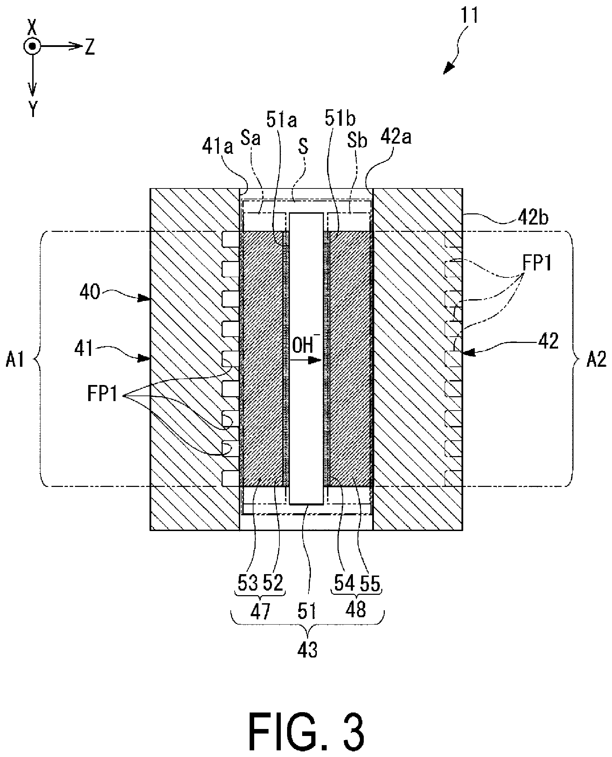

FIG. 2 is a cross-sectional view schematically illustrating the electrolytic cell 11. FIG. 3 is a cross-sectional view of the electrolytic cell 11 as viewed from a vertical direction. The electrolytic cell 11 includes, for example, a first separator 41, a second separator 42, and a membrane electrode assembly 43.

### First Separator

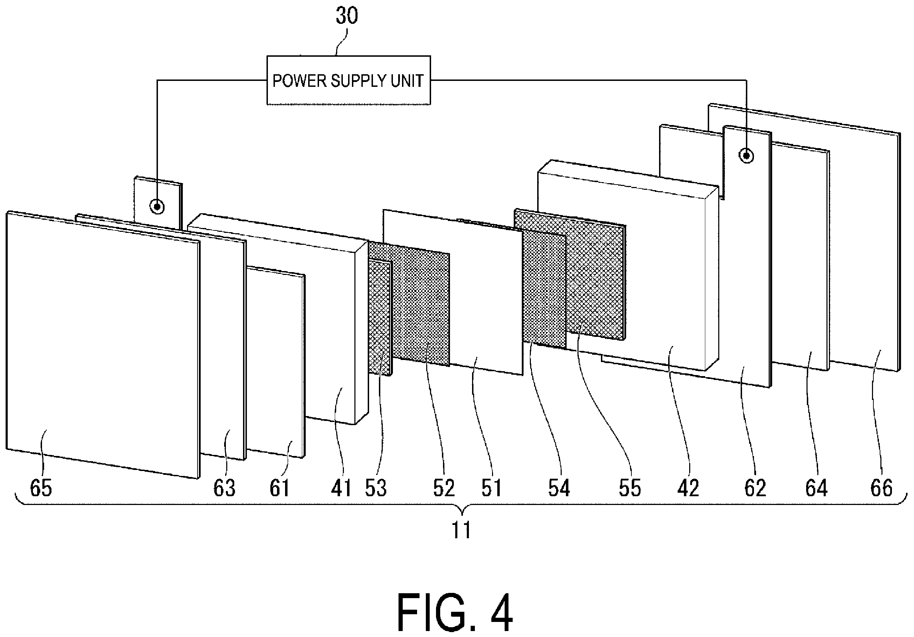

The first separator 41 is a member that defines one surface of an interior space S of the electrolytic cell 11. The interior space S is a space including the cathode chamber Sa and the anode chamber Sb to be described below. The first separator 41 has, for example, a rectangular plate shape and is formed of a metal member or a conductive member (carbon material or the like). A negative voltage is, for example, applied to the first separator 41 from the power supply unit 30 via a first current collector 61 (see FIG. 4) to be described below.

The first separator 41 includes a first end portion 41e1 (for example, a lower end portion) and a second end portion 41e2 (for example, an upper end portion) located opposite to the first end portion 41e1. The first end portion 41e1 includes a first flow path 41r1. The first flow path 41r1 is connected to the above-described pipeline L1 and supplies the electrolyte supplied from the outside of the electrolytic cell 11 via the pipeline L1 to the cathode 47 (described later) in the cathode chamber Sa. On the other hand, the second end portion 41e2 includes a second flow path 41r2. The second flow path 41r2 is connected to the above-described pipeline L2 and discharges the electrolyte containing hydrogen by passing through the cathode chamber Sa to the outside of the electrolytic cell 11 via the pipeline L2.

The first separator 41 includes a first inner surface (first surface) 41a facing the second separator 42. The first inner surface 41a faces the cathode chamber Sa to be described below. The first inner surface 41a includes a first region A1 in which a plurality of groove portions FP1 are provided (see FIG. 3). The plurality of groove portions FP1 are flow paths through which the electrolyte that has flowed into the electrolytic cell 11 through the first flow path 41r1 flows. For example, the plurality of groove portions FP1 are arranged side by side at intervals in the Y direction, and each extends in the X direction (for example, the vertical direction) (see FIG. 3). The electrolyte flowing into the inside of the electrolytic cell 11 through the first flow path 41r1 is separated to flow through the plurality of groove portions FP1, passes through the plurality of groove portions FP1, and then is discharged from the second flow path 41r2 to the outside of the electrolytic cell 11.

Each structure (for example, a flow path structure) illustrated in FIG. 2 is merely an example and does not limit the contents of the present embodiment. For example, as the flow path structure, various structures can be used according to the size, purpose, and use environment of a device. The same applies to each configuration illustrated in other drawings.

### Second Separator

The second separator 42 is a member that is disposed with the interior space S between at least part of the first separator 41 and the second separator 42 and defines another surface of the interior space S. The second separator 42 has, for example, a rectangular plate shape and is formed of a metal member. A positive voltage is applied to the second separator 42 from the power supply unit 30 via a second current collector 62 (see FIG. 4) to be described below. The first separator 41 and the second separator 42 included in the same electrolytic cell 11 form an electrolytic tank 40 of the electrolytic cell 11 as a pair of separators.

The second separator 42 includes a first end portion 42e1 (for example, a lower end portion) and a second end portion 42e2 (for example, an upper end portion) located opposite to the first end portion 42e1. The second separator 42 does not include a flow path for supplying the electrolyte to an anode 48 to be described below.

Instead, the second end portion 42e2 includes the gas discharge port 42g. The gas discharge port 42g is a discharge port through which gas (for example, oxygen) generated at the anode 48 is mainly discharged. In the present embodiment, the gas discharge port 42g is connected to the pipeline L4 and discharges the gas (for example, oxygen) generated at the anode 48 to the outside of the electrolytic cell 11.

On the other hand, the first end portion 42e1 includes the liquid discharge port 42h. The liquid discharge port 42h is a discharge port through which liquid (for example, water) generated at the anode 48 is mainly discharged. That is, in the second separator 42, the gas discharge port 42g and the liquid discharge port 42h are separately provided. In the present embodiment, the liquid discharge port 42h is connected to the pipeline L4 and discharges the liquid (for example, water) generated at the anode 48 to the outside of the electrolytic cell 11.

In the present embodiment, the liquid discharge port 42h is provided below the gas discharge port 42g. For example, the gas discharge port 42g is provided above the center of the anode chamber Sb in the vertical direction. The liquid discharge port 42h is provided below the center of the anode chamber Sb in the vertical direction.

Among the water and the oxygen generated in the anode chamber Sb, the water having a specific gravity larger than that of the oxygen moves downward by its own weight and is accumulated. As a result, the water and the oxygen are vertically separated in the anode chamber Sb. The oxygen separated in the anode chamber Sb flows into the gas discharge port 42g. The water separated in the anode chamber Sb flows into the liquid discharge port 42h. It should be noted that the water flowing into the liquid discharge port 42h may contain the oxygen.

FIG. 3 is a cross-sectional view of the electrolytic cell 11 illustrated in FIG. 2 taken along an F3-F3 line. The second separator 42 includes a second inner surface (second surface) 42a facing the first separator 41. The second inner surface 42a faces the anode chamber Sb to be described below. In the present embodiment, the second inner surface 42a does not include a groove portion through which the electrolyte flows. The second inner surface 42a includes a second region A2 facing the first region A1 (the region where the plurality of groove portions FP1 are provided) of the first separator 41. The second region A2 is formed in a planer shape.

Here, for convenience of description, a configuration in which the first inner surface 41a of the first separator 41 includes the plurality of groove portions FP1 is described. However, for example, the second separator 42 of the electrolytic cell 11 included in the electrolytic cell stack 10 (see FIG. 1) may be a bipolar plate also including a similar plurality of groove portions FP1 (indicated by a dash-double-dot line in FIG. 3) at a surface 42b opposite to the second inner surface 42a.

### Membrane Electrode Assembly

The membrane electrode assembly (MEA) 43 is a structure in which an ion exchange membrane, a catalyst, and a power feeder are assembled. The membrane electrode assembly 43 is disposed between the first separator 41 and the second separator 42 and is located in the interior space S. The membrane electrode assembly 43 includes, for example, an ion exchange membrane 51, a cathode catalyst layer 52, a cathode power feeder 53, an anode catalyst layer 54, and an anode power feeder 55.

### Ion Exchange Membrane

The ion exchange membrane 51 is a membrane that selectively allows ions to pass therethrough. The ion exchange membrane 51 is, for example, a solid polymer electrolyte membrane. The ion exchange membrane 51 is, for example, an anion exchange membrane (AEM) having hydroxide ion conductivity. The ion exchange membrane 51 has, for example, a rectangular sheet shape. The outer size of the ion exchange membrane 51 is smaller than the outer size of the first separator 41 or the second separator 42. The ion exchange membrane 51 is disposed between the first separator 41 and the second separator 42 and is located in the interior space S described above. The ion exchange membrane 51 includes a first surface 51a facing the first inner surface 41a of the first separator 41 and a second surface 51b located opposite to the first surface 51a and facing the second inner surface 42a of the second separator 42. In the interior space S, the cathode chamber Sa is defined between the first surface 51a of the ion exchange membrane 51 and the first inner surface 41a of the first separator 41. In the interior space S, the anode chamber Sb is defined between the second surface 51b of the ion exchange membrane 51 and the second inner surface 42a of the second separator 42.

The electrolyte is supplied to the cathode chamber Sa from the first flow path 41r1 of the first separator 41. In the cathode chamber Sa, when a voltage is applied to the electrolytic cell 11, the following chemical reaction occurs, and hydrogen is generated from the electrolyte. That is, at the cathode 47, at least part of the supplied electrolyte is consumed, and hydrogen and hydroxide ions are generated. It should be noted that the expression "XX is generated" in the present application may include a case where another substance is generated simultaneously with the generation of XX. The hydroxide ions generated in the cathode chamber Sa move from the cathode chamber Sa to the anode chamber Sb through the ion exchange membrane 51.

2H₂O + 2e⁻ → H₂ + 2OH⁻ ... (Chemical Reaction 1)

In the anode chamber Sb, when a voltage is applied to the electrolytic cell 11, the following chemical reaction occurs, and oxygen and water are generated from the hydroxide ions moved from the cathode chamber Sa to the anode chamber Sb. That is, at the anode 48, the oxygen and the water are generated by the hydroxide ions that have passed through the ion exchange membrane 51 from the cathode 47 in a state where the electrolyte is not supplied.

2OH⁻ → 1/2O₂ + H₂O + 2e⁻ ... (Chemical Reaction 2)

As a result, the following chemical reaction occurs in the electrolytic cell 11 in whole.

H₂O → H₂ + 1/2O₂ ... (Chemical Reaction 3)

### Cathode Catalyst Layer

The cathode catalyst layer 52 is a layer that accelerates the above-described chemical reaction in the cathode chamber Sa. The cathode catalyst layer 52 has, for example, a rectangular sheet shape. The cathode catalyst layer 52 is disposed in the cathode chamber Sa and is adjacent to the ion exchange membrane 51 in the Z direction. In the present application, "adjacent to" is not limited to a case where two members are independently adjacent to each other and may include a case where at least part of one member of the two members enters the other member. For example, part of the cathode catalyst layer 52 may enter a surface portion of the ion exchange membrane 51. In the present embodiment, the cathode catalyst layer 52 is provided on the first surface 51a of the ion exchange membrane 51. For example, the cathode catalyst layer 52 is formed by applying a material of the cathode catalyst layer 52 to the first surface 51a of the ion exchange membrane 51. The cathode catalyst layer 52 is applied with a negative voltage from the power supply unit 30 via the first separator 41 and the cathode power feeder 53 and functions as the cathode 47 of the electrolytic cell 11. The material of the cathode catalyst layer 52 may be a material that accelerates the above-described chemical reaction in the cathode chamber Sa, and various materials can be used.

### Cathode Power Feeder

The cathode power feeder 53 is an electrical connection portion that transmits a voltage applied to the first separator 41 to the cathode catalyst layer 52. The cathode power feeder 53 is disposed in the cathode chamber Sa. The cathode power feeder 53 is located between the first inner surface 41a of the first separator 41 and the cathode catalyst layer 52 and is in contact with the first inner surface 41a of the first separator 41 and the cathode catalyst layer 52. The cathode power feeder 53 has a structure through which the electrolyte and gas can pass. The cathode power feeder 53 is formed of, for example, a metallic mesh structural body, a sintered body (porous body), or a fiber. In the present embodiment, the outer size of the cathode power feeder 53 is the same as the outer size of the cathode catalyst layer 52. In the present embodiment, the cathode 47 of the electrolytic cell 11 is formed of the cathode catalyst layer 52 and the cathode power feeder 53.

### Anode Catalyst Layer

The anode catalyst layer 54 is a layer that accelerates the above-described chemical reaction in the anode chamber Sb. The anode catalyst layer 54 has, for example, a rectangular sheet shape. The anode catalyst layer 54 is disposed in the anode chamber Sb and is adjacent to the ion exchange membrane 51 in the Z direction. For example, part of the anode catalyst layer 54 may enter the surface portion of the ion exchange membrane 51. In the present embodiment, the anode catalyst layer 54 is provided on the second surface 51b of the ion exchange membrane 51. For example, the anode catalyst layer 54 is formed by applying a material of the anode catalyst layer 54 to the second surface 51b of the ion exchange membrane 51. The anode catalyst layer 54 is applied with a positive voltage from the power supply unit 30 via the second separator 42 and the anode power feeder 55 and functions as part of the anode 48 of the electrolytic cell 11. The material of the anode catalyst layer 54 may be a material that accelerates the above-described chemical reaction in the anode chamber Sb, and various materials can be used.

### Anode Power Feeder

The anode power feeder 55 is an electrical connection portion that transmits a voltage applied to the second separator 42 to the anode catalyst layer 54. The anode power feeder 55 is disposed in the anode chamber Sb. The anode power feeder 55 is located between the second inner surface 42a of the second separator 42 and the anode catalyst layer 54 and is in contact with the second inner surface 42a of the second separator 42 and the anode catalyst layer 54. The anode power feeder 55 has a structure through which the electrolyte and gas can pass. The anode power feeder 55 is formed of, for example, a metallic mesh structural body, a sintered body (porous body), or a fiber. In the present embodiment, the outer size of the anode power feeder 55 is the same as the outer size of the anode catalyst layer 54. In the present embodiment, the average size of the plurality of holes included in the anode power feeder 55 is larger than the average size of the plurality of holes included in the cathode power feeder 53. For example, when both the cathode power feeder 53 and the anode power feeder 55 are mesh structural bodies, the anode power feeder 55 has a coarser mesh structural body than the cathode power feeder 53. In the present embodiment, a void ratio of the anode power feeder 55 is larger than a void ratio of the cathode power feeder 53. In the present embodiment, the anode 48 of the electrolytic cell 11 is formed of the anode catalyst layer 54 and the anode power feeder 55.

FIG. 4 is an exploded perspective view illustrating the electrolytic cell 11. In addition to the above-described configuration, the electrolytic cell 11 includes, for example, the first current collector 61, the second current collector 62, a first insulating material 63, a second insulating material 64, a first endplate 65, and a second endplate 66.

### First Current Collector

The first current collector 61 is an electrical connection portion that transmits a negative voltage applied from the power supply unit 30 to the first separator 41. The first current collector 61 is a metallic plate member (for example, a copper plate). The first current collector 61 is, for example, in contact with the first separator 41 from a side opposite to the interior space S of the electrolytic cell 11 and is electrically connected to the first separator 41. A negative voltage required for the electrolyzation in the electrolytic cell 11 is applied to the first current collector 61 from the power supply unit 30. The first current collector 61 may be shared by the plurality of electrolytic cells 11 included in the electrolytic cell stack 10.

### Second Current Collector

The second current collector 62 is an electrical connection portion that transmits a positive voltage applied from the power supply unit 30 to the second separator 42. The second current collector 62 is a metallic plate member (for example, a copper plate). The second current collector 62 is, for example, in contact with the second separator 42 from a side opposite to the interior space S of the electrolytic cell 11 and is electrically connected to the second separator 42. A positive voltage required for the electrolyzation in the electrolytic cell 11 is applied to the second current collector 62 from the power supply unit 30. The second current collector 62 may be shared by the plurality of electrolytic cells 11 included in the electrolytic cell stack 10.

### First Insulating Material

The first insulating material 63 is located between the first current collector 61 and the first endplate 65. For example, the outer size of the first insulating material 63 is larger than the outer size of the first current collector 61.

### Second Insulating Material

The second insulating material 64 is located between the second current collector 62 and the second endplate 66. For example, the outer size of the second insulating material 64 is larger than the outer size of the second current collector 62.

### First Endplate

The first endplate 65 is located opposite to the first insulating material 63 with respect to the interior space S of the electrolytic cell 11. The outer size of the first endplate 65 is, for example, the same as or larger than the outer size of the first insulating material 63.

### Second Endplate

The second endplate 66 is located opposite to the second insulating material 64 with respect to the interior space S of the electrolytic cell 11. The outer size of the second endplate 66 is, for example, the same as or larger than the outer size of the second insulating material 64. In the present embodiment, the first endplate 65 and the second endplate 66 are fastened to each other by a fastening member (not illustrated), so that pressing forces facing each other act on the first separator 41 and the second separator 42, respectively, and the electrolytic cell 11 is integrated.

The electrolytic cell 11 is not limited to the above-described configuration. For example, when the plurality of electrolytic cells 11 are arranged side by side in the electrolytic cell stack 10, two adjacent electrolytic cells 11 out of the plurality of electrolytic cells 11 may share the first separator 41 and the second separator 42. In that case, the current collector (the first current collector 61 or the second current collector 62), the insulating material (the first insulating material 63 or the second insulating material 64), and the endplate (the first endplate 65 or the second endplate 66) are not necessarily present between the two adjacent electrolytic cells 11.

### 2.2 Structure of Outer Peripheral Portion of Electrolytic Cell

FIG. 5 is a cross-sectional view illustrating the electrolytic cell 11. In the present embodiment, the outer size of the ion exchange membrane 51 is larger than each of the outer size of the cathode power feeder 53 and the outer size of the anode power feeder 55. The ion exchange membrane 51 protrudes to an outer side (outer peripheral side) of the cathode catalyst layer 52 and the cathode power feeder 53 in a direction (for example, the X direction or the Y direction) orthogonal to the thickness direction (the Z direction) of the membrane electrode assembly 43. In the present disclosure, "outer side" or "outer peripheral side" means a side away from the central portion C of the membrane electrode assembly 43 in a direction (for example, the X direction or the Y direction) orthogonal to the thickness direction (the Z direction) of the membrane electrode assembly 43.

As illustrated in FIG. 5, the electrolytic cell 11 includes, for example, a support part 70 and a sealing part 80. The support part 70 is a member that supports the membrane electrode assembly 43 inside the electrolytic cell 11. The sealing part 80 is a member that closes the interior space S between the first separator 41 and the second separator 42. These points will be described below.

### Support Part

The support part 70 is disposed between the first separator 41 and the second separator 42. The support part 70 is located on an inner side (inner peripheral side) of an outer edge portion 51e of the ion exchange membrane 51 and supports the ion exchange membrane 51. The support part 70 includes, for example, a first support part 71 and a second support part 72.

The first support part 71 is a support part on the cathode side. The first support part 71 is disposed between the first inner surface 41a of the first separator 41 and the first surface 51a of the ion exchange membrane 51. The first support part 71 is sandwiched between the first inner surface 41a of the first separator 41 (or the first insulating material 63) and the first surface 51a of the ion exchange membrane 51 at a position outer side (outer peripheral side) of the cathode catalyst layer 52 and the cathode power feeder 53 and supports the ion exchange membrane 51 with respect to the first inner surface 41a of the first separator 41.

The second support part 72 is a support part on the anode side. The second support part 72 is disposed between the second inner surface 42a of the second separator 42 and a third surface 52a of the ion exchange membrane 51. The second support part 72 is sandwiched between the second inner surface 42a of the second separator 42 and the third surface 52a of the ion exchange membrane 51 at an outer side (outer peripheral side) of the anode catalyst layer 54 and the anode power feeder 55 and supports the ion exchange membrane 51 with respect to the second inner surface 42a of the second separator 42.

### Sealing Part

The sealing part 80 is disposed between the first separator 41 and the second separator 42. The sealing part 80 is located on an outer side (outer peripheral side) of the outer edge portion 51e of the ion exchange membrane 51 and seals the interior space S of the electrolytic cell 11. In the present embodiment, the sealing part 80 includes a first sealing part 81 and a second sealing part 82. However, the first sealing part 81 and the second sealing part 82 may be integrally formed. That is, the first sealing part 81 and the second sealing part 82 may be a single member.

The first sealing part 81 is a sealing part on the cathode side. The first sealing part 81 is located on an outer side (outer peripheral side) of the outer edge portion 51e of the ion exchange membrane 51. The first sealing part 81 is sandwiched between the first inner surface 41a of the first separator 41 and the second sealing part 82 and seals part of an outer peripheral side of the interior space S.

The second sealing part 82 is a sealing part on the anode side. The second sealing part 82 is located on an outer side of the outer edge portion 51e of the ion exchange membrane 51. The second sealing part 82 is sandwiched between the second inner surface 42a of the second separator 42 and the first sealing part 81 and seals part of the outer peripheral side of the interior space S.

### 3. Operational Effects

In the present embodiment, the first flow path 41r1 is formed only in the first separator 41, and the electrolyte is supplied to the cathode 47. On the other hand, the second separator 42 does not include a flow path through which the electrolyte flows, and the electrolyte is not supplied to the anode 48. According to such a configuration, at the cathode 47, at least part of the electrolyte supplied from the first flow path 41r1 is consumed and the hydrogen and the hydroxide ions are generated, and at the anode 48, the oxygen and the water are generated by the hydroxide ions that have passed through the ion exchange membrane 51 from the cathode 47 in a state where the electrolyte is not supplied. According to such a configuration, the amount of the electrolyte required for the operation of the electrolyzer 1 is halved as compared with the case where the electrolyte is supplied to both the cathode 47 and the anode 48, and the operation cost of the electrolyzer 1 can be reduced. In addition, according to the above-described configuration, various configurations required for supplying the electrolyte are not necessary on the anode 48 side, which leads to cost reduction. Further, according to the above-described configuration, the hydrogen ion concentration (pH) of the electrolyte, which changes with the operation of the electrolyzer 1, can be managed only on the cathode side. As a result, the management burden during the operation can be reduced as compared with the case where the electrolyte is supplied to both the cathode 47 and the anode 48.

Further, according to the above-described configuration, the electrolyte required for generating the hydrogen and the hydroxide ions on the cathode 47 side is supplied not to the anode 48 side but to the cathode 47 side. Thus, the electrolyte consumed to generate the hydrogen and the hydroxide ions on the cathode 47 side is supplied to the cathode 47 without passing through the ion exchange membrane 51. As a result, the loss inside the electrolytic cell 11 can be reduced, and the electrolytic performance in the electrolytic cell 11 can be improved.

In the present embodiment, the gas discharge port 42g and the liquid discharge port 42h are separately provided in the second separator 42. As a result, the oxygen and the water generated on the anode 48 side are separately discharged from the gas discharge port 42g and the liquid discharge port 42h, respectively. As a result, the oxygen and the water can be obtained from the inside of the electrolytic cell 11 in a state of being separated to some extent. Thus, as compared with the case where the oxygen and the water are discharged in a mixed state from the inside of the electrolytic cell 11, the necessity of providing a gas-liquid separation mechanism for separating the oxygen and the water outside the electrolytic cell 11 is suppressed, which leads to cost reduction.

In the present embodiment, the liquid discharge port 42h is provided below the gas discharge port 42g. According to such a configuration, the water falls by its own weight inside the electrolytic cell 11, so that the oxygen and the water are separated from each other, the water is accumulated in the lower portion in the electrolytic cell 11, and the oxygen is accumulated in the upper portion in the electrolytic cell 11. By providing the liquid discharge port 42h below the gas discharge port 42g, the water accumulated in the lower portion in the electrolytic cell 11 can be discharged from the liquid discharge port 42h, and the oxygen accumulated in the upper portion in the electrolytic cell 11 can be discharged from the gas discharge port 42g. In this way, the oxygen and the water can be efficiently separated from each other without particularly providing the gas-liquid separation mechanism inside the electrolytic cell 11. From another viewpoint, according to the above-described configuration, the flow of the water into the gas discharge port 42g can be suppressed, and gas (oxygen) can be smoothly discharged from the gas discharge port 42g. As a result, the gas discharge port 42g can be prevented from being blocked with the water and the ion exchange membrane 51 can be prevented from being damaged due to an increase in a pressure in the anode chamber Sb.

In the present embodiment, by providing the gas discharge port 42g above the center of the anode chamber Sb in the vertical direction, the oxygen accumulated in the upper portion of the anode chamber Sb can be smoothly discharged from the gas discharge port 42g. In addition, by providing the liquid discharge port 42h below the center of the anode chamber Sb in the vertical direction, the water accumulated in the lower portion of the anode chamber Sb can be smoothly discharged from the liquid discharge port 42h. Here, when the liquid discharge port 42h is disposed above the center of the anode chamber Sb in the vertical direction, a region below the liquid discharge port 42h in the anode chamber Sb is filled with the pure water. In this case, a difference in the hydrogen ion concentration (pH) between the cathode 47 side where the electrolyte is present and the anode 48 side where the pure water is present becomes large, and the electrolytic performance of the electrolytic cell 11 deteriorates. In view of this, in the present embodiment, by providing the liquid discharge port 42h below the center of the anode chamber Sb in the vertical direction, the anode chamber Sb is prevented from being largely filled with water. As a result, the electrolytic performance of the electrolytic cell 11 can be improved.

In the present embodiment, the average size of the plurality of holes included in the anode power feeder 55 is larger than the average size of the plurality of holes included in the cathode power feeder 53. According to such a configuration, since the electrolyte is supplied only to the cathode 47 side and the electrolyte is not supplied to the anode 48 side, the electrolyte does not pass through the anode power feeder 55 on the anode 48 side. Thus, by making the average size of the plurality of holes included in the anode power feeder 55 larger than the average size of the plurality of holes included in the cathode power feeder 53, the gas (air) generated at the anode 48 easily moves in the anode power feeder 55 toward the gas discharge port 42g. As a result, the electrolytic performance of the electrolytic cell 11 can be improved.

In the present embodiment, the void ratio of the anode power feeder 55 is larger than the void ratio of the cathode power feeder 53. According to such a configuration, since the electrolyte is supplied only to the cathode 47 side and the electrolyte is not supplied to the anode 48 side, the electrolyte does not pass through the anode power feeder 55 on the anode 48 side. Thus, by making the void ratio of the anode power feeder 55 larger than the void ratio of the cathode power feeder 53, the gas (air) generated at the anode 48 easily moves in the anode power feeder 55 toward the gas discharge port 42g. As a result, the electrolytic performance of the electrolytic cell 11 can be further improved.

In the present embodiment, the first inner surface 41a of the first separator 41 includes the first region A1 including the plurality of groove portions FP1. The second inner surface 42a of the second separator 42 includes the second region A2 facing the first region A1 of the first separator 41. The second region A2 is formed in a planer shape. According to such a configuration, the water generated at the anode easily moves along the second region A2 having a planer shape toward the liquid discharge port 42h. As a result, the electrolytic performance of the electrolytic cell 11 can be further improved. In addition, by forming the second region A2 in a planer shape, the structure of the second separator 42 can be simplified, which leads to cost reduction. In addition, when the entire second separator 42 is formed in a planer shape, the thickness of the second separator 42 can be reduced as compared with a case where the groove portions are provided in the second separator 42. In this case, the electrolytic cell stack 10 can be reduced in size.

In the present embodiment, the electrolyzer 1 further includes a gas-liquid separator 29 that separates the gas contained in the liquid discharged from the liquid discharge port 42h and merges the separated gas with the gas discharged from the gas discharge port 42g. According to such a configuration, the gas contained in the liquid discharged from the liquid discharge port 42h is separated from the liquid by the gas-liquid separator 29, and is merged with the gas discharged from the gas discharge port 42g. As a result, the gas and the liquid discharged from the electrolytic cell 11 can be more reliably separated from each other.

In the present embodiment, the ion exchange resin tank 27 that removes at least part of ions contained in the water discharged from the second separator 42 is provided, and the water that has passed through the ion exchange resin tank 27 is merged with the electrolyte to be supplied to the cathode 47. According to such a configuration, the water discharged from the second separator 42 can be purified and then supplied to the cathode 47. As a result, the water generated on the anode 48 side can be effectively used for at least part of the electrolyte to be supplied to the cathode 47, and the amount of water used in the electrolyzer 1 can be suppressed. In addition, by providing the ion exchange resin tank 27, at least part of impurity ions eluted into the water from the electrolytic cell 11 or the like can be removed. In the present embodiment, since the liquid flowing through the pipeline L4 is not the electrolyte but is the water, the impurity ions eluted from the electrolytic cell 11 can be removed by using not only chelate resins but also appropriate ion exchange resins selected from various ion exchange resins. As a result, the electrolyzer 1 that is less likely to cause problems and has excellent durability can be provided.

### 4. Operations

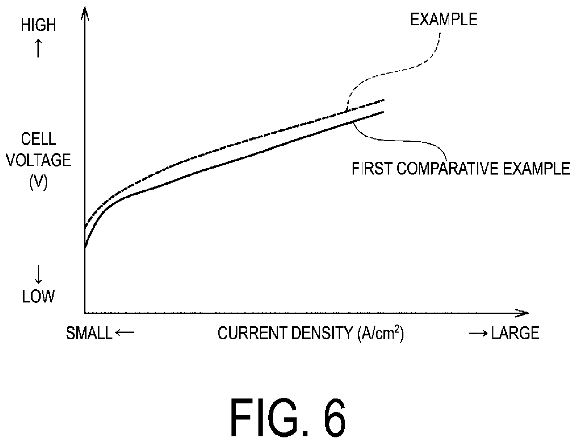

FIGS. 6, 7, and 8 are diagrams for explaining the operation of the electrolytic cell 11 according to the present embodiment.

Here, a structure in which the electrolyte is supplied only to the cathode 47 and the electrolyte is not supplied to the anode 48 will be described as an example. On the other hand, a structure in which the electrolyte is supplied to both the cathode 47 and the anode 48 will be described as a first comparative example.

Here, for each of the example and the first comparative example, a voltage was applied from the power supply unit 30, and a relationship (I-V characteristic) between a current density from the power supply unit 30 and a cell voltage generated in the electrolytic cell 11 was measured. "Cell voltage" means a potential difference between the first separator 41 and the second separator 42. As a result, as shown in FIG. 6, it was confirmed by the present inventors that the cell voltage was slightly higher in the example in which the electrolyte was supplied only to the cathode 47 than in the first comparative example, but substantially the same electrolytic performance was obtained.

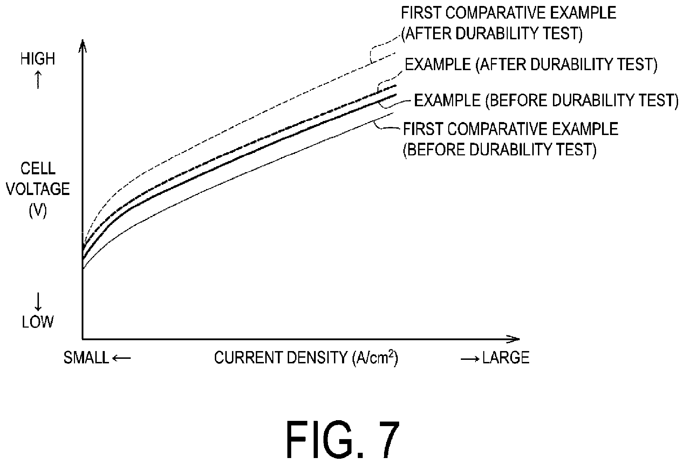

In addition, for each of the example and the first comparative example, a durability test in which a voltage was continuously applied from the power supply unit 30 for a long time was performed, and the relationship between the current density from the power supply unit 30 and the cell voltage generated in the electrolytic cell 11 was measured before and after the durability test. As a result, as shown in FIG. 7, although an electrolysis voltage was higher in the example than in the first comparative example before the durability test, the electrolysis voltage was lower in the example than in the first comparative example after the durability test, and a good electrolytic performance was obtained. As a result, it was confirmed by the present inventors that the good electrolytic performance was obtained in the electrolytic cell of the example than in the first comparative example when actual use in which normal operation continues is assumed.

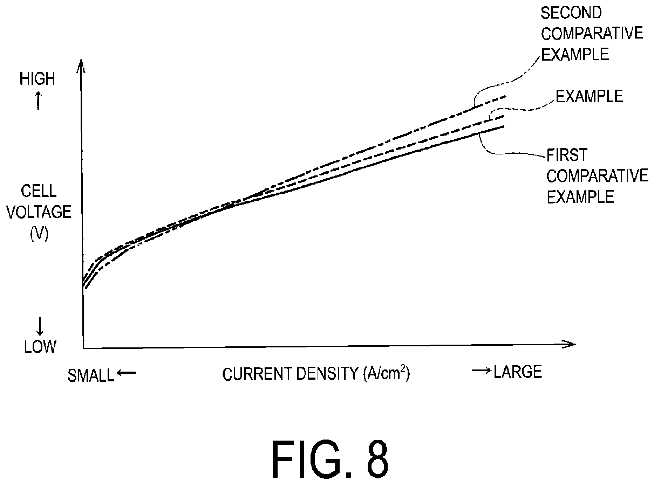

Further, as a second comparative example, an electrolytic cell having a structure in which the electrolyte was supplied only to the anode 48 and the electrolyte was not supplied to the cathode 47 was prepared. In each of the example, the first comparative example, and the second comparative example, a voltage was applied from the power supply unit 30, and the relationship between the current density from the power supply unit 30 and the cell voltage generated in the electrolytic cell 11 was measured. As a result, as shown in FIG. 8, it was confirmed by the present inventors that the cell voltage was higher in the second comparative example in which the electrolyte was supplied only to the anode 48 than in the example and the first comparative example, and the electrolytic performance deteriorated.

### 5 Modification Example

Next, a modification example of the first embodiment will be described below.

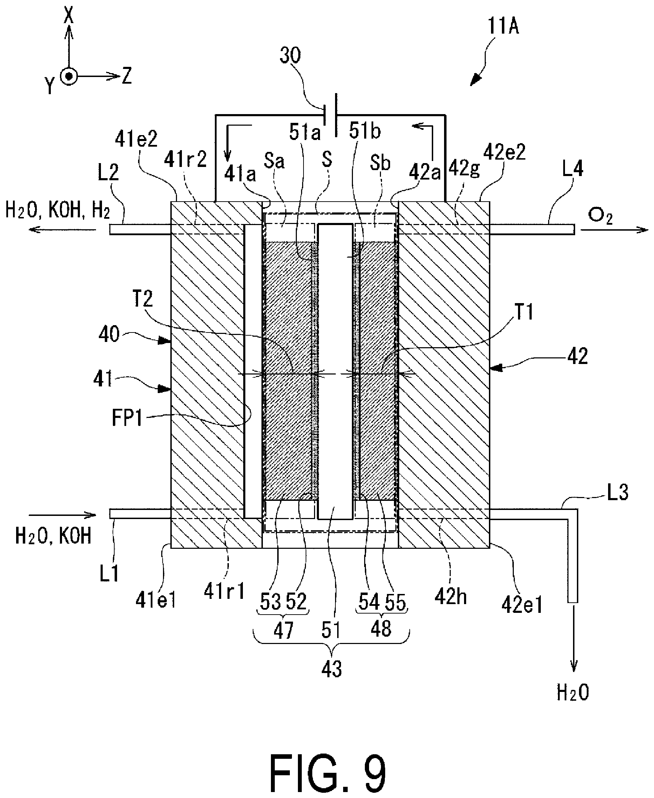

FIG. 9 is a cross-sectional view illustrating an electrolytic cell 11A according to the modification example of the first embodiment. In the first embodiment described above, the average size of the plurality of holes and the void ratio are made different between the anode power feeder 55 and the cathode power feeder 53. Instead of/in addition to this, in the present modification example, a thickness T1 of the anode power feeder 55 is smaller than a thickness T2 of the cathode power feeder 53 in a layering direction (the Z-direction) in which the first and second separators 41 and 42 overlap each other.

In such a configuration, since the electrolyte is supplied only to the cathode 47 side and the electrolyte is not supplied to the anode 48 side, the electrolyte does not pass through the anode power feeder 55. Thus, even when the thickness T1 of the anode power feeder 55 is smaller than the thickness T2 of the cathode power feeder 53, the anode power feeder 55 can sufficiently exhibit its function. As a result, the electrolytic cell 11 can be reduced in size (thickness), cost, and the like.

### Second Embodiment

Next, a second embodiment will be described. The second embodiment is different from the first embodiment in that a discharge port 90 for discharging the oxygen and the water is provided on the anode 48 side. Configurations other than those described below are the same as the configurations of the first embodiment.

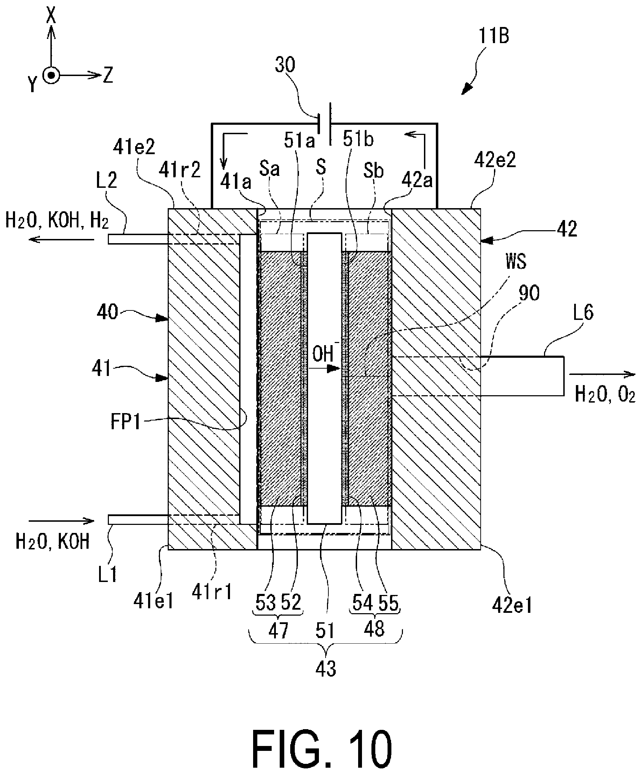

FIG. 10 is a cross-sectional view illustrating an electrolytic cell 11B of the second embodiment. In the present embodiment, the second separator 42 includes the discharge port 90 through which the oxygen and the water are collectively discharged. In the present embodiment, the discharge port 90 is formed such that a top end of the discharge port 90 is located above a water surface WS of the water accumulated in the anode chamber Sb in a steady operating state of the electrolytic cell 11B. "Formed such that a top end of the discharge port is located above the water surface of the water accumulated in the anode chamber" means, for example, that an opening area of the discharge port 90 is set such that the flow rate of water flowing out from the discharge port 90 to the outside per unit time is larger than the amount of water generated in the anode chamber Sb per unit time in the steady operating state.

In the present embodiment, the discharge port 90 is provided at a center or below the center of the anode chamber Sb in the vertical direction. The oxygen and the water discharged from the discharge port 90 to the outside of the electrolytic cell 11B are fed to the oxygen gas-liquid separator 29 through a pipeline L6, and the oxygen and the water are separated.

In the present embodiment, the second separator 42 includes the discharge port 90 through which the oxygen and the water are discharged. As a result, the oxygen and the water generated in the anode chamber Sb are discharged in a mixed state from the discharge port 90. The top end of the discharge port 90 is located above the water surface WS of the water accumulated in the anode chamber Sb in the steady operating state of the electrolytic cell 11. Thus, the oxygen accumulated above the water surface WS of the water accumulated in the anode chamber Sb in the steady operating state of the electrolytic cell 11 can be always discharged through the discharge port 90. As a result, the discharge port 90 can be prevented from being blocked with water and the ion exchange membrane 51 can be prevented from being damaged due to an increase in a pressure in the anode chamber Sb.

Here, when the discharge port 90 is disposed above the center of the anode chamber Sb in the vertical direction, a region below the discharge port 90 in the anode chamber Sb is filled with the pure water. In this case, a difference in the hydrogen ion concentration (pH) between the cathode 47 side where the electrolyte is present and the anode 48 side where the pure water is present becomes large, and the electrolytic performance of the electrolytic cell 11 deteriorates. Thus, in the present embodiment, the discharge port 90h is provided at the center or below the center of the anode chamber Sb in the vertical direction. As a result, the anode chamber Sb is prevented from being largely filled with water, and the electrolytic performance of the electrolytic cell 11 can be improved.

### Third Embodiment

Next, a third embodiment will be described. The third embodiment is different from the second embodiment in that a suction device 95 connected to the discharge port 90 is provided. Configurations other than those described below are the same as the configurations of the second embodiment.

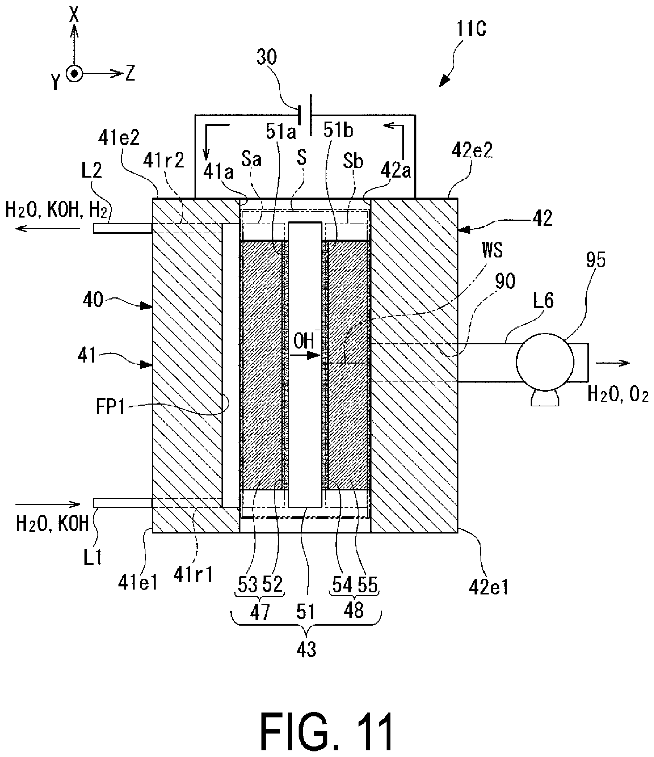

FIG. 11 is a cross-sectional view illustrating the electrolytic cell 11C of the third embodiment. In the present embodiment, the electrolytic cell 11C further includes the suction device 95 connected to the discharge port 90. The suction device 95 is, for example, a pump or the like, and sucks the oxygen and the water toward the outside of the electrolytic cell 11C through the discharge port 90. As a result, even when the discharge port 90 for collectively discharging the water and the oxygen is provided, the water and the oxygen generated in the anode chamber Sb can be forcibly discharged from the discharge port 90. As a result, the oxygen and the water can be efficiently discharged while suppressing an increase in a pressure in the electrolytic cell 11C.

### Other Embodiments

Although the embodiment of the present disclosure has been described in detail with reference to the accompanying drawings, specific configurations are not limited to this embodiment, and design changes and the like without departing from the gist of the present disclosure are also included.

### Supplementary Notes

The electrolytic cells 11, 11A. 11B, and 11C and the electrolyzer 1 according to the embodiments are understood as follows, for example.
(1) Electrolytic cells 11, 11A, 11B, and 11C of a first aspect includes the first separator 41, the second separator 42, the anion exchange membrane 51 disposed between the first separator 41 and the second separator 42, the cathode 47 disposed between the first separator 41 and the anion exchange membrane 51, and the anode 48 disposed between the second separator 42 and the anion exchange membrane 51. The first separator 41 includes the first flow path 41r1 for supplying the electrolyte to the cathode 47. At the cathode 47, at least part of the electrolyte supplied from the first flow path 41r1 is consumed, and the hydrogen and the hydroxide ions are generated. The second separator 42 does not include the flow path for supplying the electrolyte to the anode 48. At the anode 48, the oxygen and the water are generated by the hydroxide ions that have passed through the ion exchange membrane 51 from the cathode 47 in a state where the electrolyte is not supplied. According to such a configuration, the first flow path 41r1 is formed only in the first separator 41, and the electrolyte is supplied to the cathode 47. The second separator 42 does not include the flow path and the electrolyte is not supplied to the anode 48. At the cathode 47, at least part of the electrolyte supplied from the first flow path 41r1 is consumed, and thus the hydrogen and the hydroxide ions are generated. That is, the electrolyte required for generating the hydrogen and the hydroxide ions on the cathode 47 side is supplied not to the anode 48 side but to the cathode 47 side. Thus, the electrolyte for generating the hydrogen and the hydroxide ions on the cathode 47 side does not pass through the anion exchange membrane 51, and loss due to resistance does not occur. As a result, the electrolytic performance in the electrolytic cells 11, 11A, 11B, and 11C can be improved.
(2) An electrolytic cell 11 of a second aspect is the electrolytic cells 11 and 11A of the first aspect, and the second separator 42 includes the gas discharge port 42g through which the oxygen is mainly discharged and the liquid discharge port 42h through which the water is mainly discharged. The gas discharge port 42g and the liquid discharge port 42h are separately provided in the second separator 42. According to such a configuration, the oxygen and the water generated on the anode 48 side are separately discharged from the gas discharge port 42g and the liquid discharge port 42h, respectively. As a result, the oxygen and the water can be smoothly discharged from the inside of the electrolytic cell 11. For example, as compared with the case where the oxygen and the water are discharged in a mixed state from the inside of the electrolytic cell 11, the necessity of providing the gas-liquid separation mechanism for separating the oxygen and the water outside the electrolytic cell 11 is suppressed, which leads to cost reduction.
(3) Electrolytic cells 11 and 11A of the third aspect are the electrolytic cells 11 and 11A of the second aspect, and the liquid discharge port 42h is provided below the gas discharge port 42g. According to such a configuration, the water falls by its own weight inside the electrolytic cell 11, so that the oxygen and the water are separated from each other, the water is accumulated in the lower portion in the electrolytic cell 11, and the oxygen is accumulated in the upper portion in the electrolytic cell 11. By providing the liquid discharge port 42h below the gas discharge port 42g, the water accumulated in the lower portion in the electrolytic cell 11 can be discharged from the liquid discharge port 42h, and the oxygen accumulated in the upper portion in the electrolytic cell 11 can be discharged from the gas discharge port 42g. In this way, the oxygen and the water can be efficiently separated from each other without particularly providing the gas-liquid separation mechanism inside the electrolytic cell 11.
(4) Electrolytic cells 11 and 11A of a fourth aspect are the electrolytic cells 11 and 11A of the second or third aspect, and the anode chamber Sb is defined between the second separator 42 and the anion exchange membrane 51. The gas discharge port 42g is provided above the center of the anode chamber Sb in the vertical direction. The liquid discharge port 42h is provided below the center of the anode chamber Sb in the vertical direction. According to such a configuration, by providing the gas discharge port 42g above the center of the anode chamber Sb in the vertical direction, the oxygen accumulated in the upper portion of the anode chamber Sb can be smoothly discharged from the gas discharge port 42g. In addition, by providing the liquid discharge port 42h below the center of the anode chamber Sb in the vertical direction, the water accumulated in the lower portion of the anode chamber Sb can be smoothly discharged from the liquid discharge port 42h.
(5) Electrolytic cells 11B and 11C of a fifth aspect are the electrolytic cells 11B and 11C of the first aspect, and the anode chamber Sb is defined between the second separator 42 and the anion exchange membrane 51. The second separator 42 includes the discharge port 90 through which the oxygen and the water are discharged. The discharge port 90 is formed such that the top end of the discharge port 90 is located above the water surface of the water accumulated in the anode chamber Sb in a steady operating state of the electrolytic cells 11B and 11C. According to such a configuration, the second separator 42 includes the discharge port 90 through which the oxygen and the water are discharged. As a result, the oxygen and the water generated in the anode chamber Sb are discharged in a mixed state from the discharge port 90. The top end of the discharge port 90 is located above the water surface WS of the water accumulated in the anode chamber Sb in the steady operating state of the electrolytic cell 11B. Thus, the oxygen accumulated above the water surface WS of the water accumulated in the anode chamber Sb in the steady operating state of the electrolytic cell 11B can be always discharged through the discharge port 90. The water accumulated in the anode chamber Sb can be discharged from the discharge port 90 when the water surface of the water is located above a lower end of the discharge port 90. In this way, even in the configuration including one discharge port 90, the water and the oxygen separated from each other by the own weight of the water in the anode chamber Sb can be discharged in a separated state.
(6) Electrolytic cells 11B and 11C of a sixth aspect are the electrolytic cells 11B and 11C of the first or fifth aspect, and the anode chamber Sb is defined between the second separator 42 and the anion exchange membrane 51. The second separator 42 includes the discharge port 90 through which the oxygen and the water are discharged. The discharge port 90 is provided at a center or below the center of the anode chamber Sb in the vertical direction. According to such a configuration, the oxygen and the water generated in the anode chamber Sb are discharged in a mixed state from the discharge port 90. When the discharge port 90 is provided at the center or below the center of the anode chamber Sb in the vertical direction, when the water surface WS of the water accumulated in the anode chamber Sb reaches above the lower end of the discharge port 90, the water is discharged from the discharge port 90. The oxygen accumulated above the water in the anode chamber Sb is discharged through the discharge port 90. In this way, even in the configuration including one discharge port 90, the water and the oxygen separated from each other by the own weight of the water in the anode chamber Sb can be discharged in a separated state.
(7) Electrolytic cells 11, 11A, 11B, and 11C of a seventh aspect are the electrolytic cells 11, 11A, 11B, and 11C of any one of the first to sixth aspects, and the cathode 47 is disposed between the first separator 41 and the anion exchange membrane 51 and includes the cathode power feeder 53 being the mesh structural body, the porous body, or the fiber. The anode 48 disposed between the second separator 42 and the anion exchange membrane 51 and including the anode power feeder 55 being the mesh structural body, the porous body, or the fiber. The average size of the plurality of holes included in the anode power feeder 55 is larger than the average size of the plurality of holes included in the cathode power feeder 53. According to such a configuration, the electrolyte is supplied only to the cathode 47 side and the electrolyte is not supplied to the anode 48 side. Thus, the electrolyte does not pass through the anode power feeder 55 on the anode 48 side. Thus, by making the average size of the plurality of holes included in the anode power feeder 55 larger than the average size of the plurality of holes included in the cathode power feeder 53, for example, the separation of the gas and the liquid in the anode chamber Sb can be accelerated and the discharge of the gas and the liquid can be accelerated. As a result, an operation performance of the electrolytic cells 11, 11A. 11B, and 11C can be improved.
(8) Electrolytic cells 11, 11A. 11B, and 11C of an eighth aspect are the electrolytic cells 11, 11A, 11B, 11C of any one of the first to seventh aspects, and the cathode 47 is disposed between the first separator 41 and the anion exchange membrane 51 and includes the cathode power feeder 53 being the mesh structural body, the porous body, or the fiber. The anode 48 disposed between the second separator 42 and the anion exchange membrane 51 and including the anode power feeder 55 being the mesh structural body, the porous body, or the fiber. The void ratio of the anode power feeder 55 is larger than the void ratio of the cathode power feeder 53. According to such a configuration, the electrolyte is supplied only to the cathode 47 side and the electrolyte is not supplied to the anode 48 side. Thus, the electrolyte does not pass through the anode power feeder 55 on the anode 48 side. Thus, by making the void ratio of the anode power feeder 55 larger than the void ratio of the cathode power feeder 53, for example, the separation of the gas and the liquid in the anode chamber Sb can be accelerated and the discharge of the gas and the liquid can be accelerated. As a result, an operation performance of the electrolytic cells 11, 11A. 11B, and 11C can be improved.
(9) Electrolytic cell 11A of a ninth aspect is the electrolytic cell 11A of any one of the first to eighth aspects, and the cathode 47 is disposed between the first separator 41 and the anion exchange membrane 51 and includes the cathode power feeder 53 being the mesh structural body, the porous body, or the fiber. The anode 48 disposed between the second separator 42 and the anion exchange membrane 51 and including the anode power feeder 55 being the mesh structural body, the porous body, or the fiber. The thickness T1 of the anode power feeder 55 is smaller than the thickness T2 of the cathode power feeder 53 in the layering direction (the Z-direction) in which the first and second separators 41 and 42 overlap each other. According to such a configuration, the electrolyte is supplied only to the cathode 47 side and the electrolyte is not supplied to the anode 48 side. Thus, the electrolyte does not pass through the anode power feeder 55. Thus, even when the thickness T1 of the anode power feeder 55 is smaller than the thickness T2 of the cathode power feeder 53 in the layering direction in which the first and second separators 41 and 42 overlap each other, the anode power feeder 55 can sufficiently exhibit its function. As a result, the electrolytic cell 11A can be reduced in size (thickness) and cost.
(10) Electrolytic cells 11, 11A. 11B, and 11C of a tenth aspect is the electrolytic cells 11, 11A, 11B, and 11C of any one of the first to ninth aspects, and the first separator 41 includes the first inner surface 41a facing the second separator 42. The first inner surface 41a includes the first region A1 provided with the plurality of groove portions FP1 through which the electrolyte flows. The second separator 42 includes the second inner surface 42a facing the first separator 41. The second inner surface 42a includes the second region A2 facing the first region A1. The second region A2 is formed in a planer shape. As a result, the structure of the first separator 41 can be simplified, and the electrolytic cell 11A can be reduced in size (thickness) and cost.
(11) An electrolyzer 1 of an eleventh aspect includes the electrolytic cells 11, 11A, 11B, and 11C of the first or second aspect, the electrolyte supply unit 20 for supplying the electrolyte to the electrolytic cells 11, 11A, 11B, and 11C, and the power supply unit 30 for applying a voltage to the electrolytic cells 11, 11A, 11B, and. 11C. According to such a configuration, the electrolytic performance of the electrolyzers 1 respectively including the electrolytic cells 11, the 11A, the 11B, and the 11C can be improved.
(12) An electrolyzer 1 of a twelfth aspect is the electrolyzer 1 of the eleventh aspect, and the second separator 42 includes the gas discharge port 42g through which gas generated at the anode 48 is mainly discharged, and the liquid discharge port 42h through which liquid generated at the anode 48 is mainly discharged. The gas discharge port 42g and the liquid discharge port 42h are separately provided in the second separator 42. The electrolyzer 1 further includes the gas-liquid separator 29 that separates the gas contained in the liquid discharged from the liquid discharge port 42h and merges the separated gas with the gas discharged from the gas discharge port 42g. According to such a configuration, the gas and the liquid generated on the anode 48 side are separately discharged from the gas discharge port 42g and the liquid discharge port 42h, respectively. The gas contained in the liquid discharged from the liquid discharge port 42h is separated from the liquid by the gas-liquid separator 29, and is merged with the gas discharged from the gas discharge port 42g. As a result, the gas and the liquid discharged from the electrolytic cell 11 can be more reliably separated from each other.
(13) The electrolyzer 1 of a thirteenth aspect is the electrolyzer 1 of the eleventh or twelfth aspect, further including the ion exchange resin tank 27 into which the liquid discharged from the second separator 42 flows and which removes at least part of ions contained in the water, and the pipeline L4 for guiding the water that has passed through the ion exchange resin tank 27 so as to be merged with the electrolyte to be supplied to the cathode 47. According to such a configuration, at least part of ions contained in the water discharged from the second separator 42 is removed by the ion exchange resin tank 27. As a result, impurities can be removed from the water discharged from the second separator 42. The water purified by passing through the ion exchange resin tank 27 is merged with the electrolyte to be supplied to the cathode 47 through the pipeline L4. As a result, the water generated on the anode 48 side can be effectively used for at least part of the electrolyte to be supplied to the cathode 47, and the amount of water used in the electrolyzer 1 can be suppressed.
(14) An electrolyzer 1 of a fourteenth aspect is the electrolyzer 1 of any one of the eleventh to thirteenth aspects, and the second separator 42 includes the discharge port 90 through which the oxygen and the water are discharged. The electrolyzer 1 further includes the suction device 95 connected to the discharge port 90 and sucking the oxygen and the water toward the outside of the electrolytic cell 11C. According to such a configuration, when the oxygen and the water are discharged from the second separator 42 through the discharge port 90, the oxygen and the water are sucked toward the outside of the electrolytic cell 11C by the suction device 95. As a result, the oxygen and the water can be efficiently discharged while suppressing an increase in a pressure in the electrolytic cell 11C.
(15) An electrolytic cell 11 of a fifteenth aspect includes the first separator 41, the second separator 42, the ion exchange membrane 51 disposed between the first separators 41 and the second separators 42, the cathode 47 disposed between the first separator 41 and the ion exchange membrane 51, and the anode 48 disposed between the second separator 42 and the ion exchange membrane 51, the first separator 41 includes the first flow path 41r1 for supplying the electrolyte to the cathode 47, and the second separator 42 does not include the flow path for supplying the electrolyte to the anode 48. The second separator includes the gas discharge port 42g through which the gas generated at the anode 48 is mainly discharged, and the liquid discharge port 42h through which the liquid generated at the anode 48 is mainly discharged. The gas discharge port 42g and the liquid discharge port 42h are separately provided in the second separator 42. According to such a configuration, the gas discharge port 42g and the liquid discharge port 42h are separately provided in the second separator 42. As a result, the oxygen and the water generated on the anode 48 side are separately discharged from the gas discharge port 42g and the liquid discharge port 42h, respectively. As a result, the oxygen and the water can be smoothly discharged from the inside of the electrolytic cell 11. Thus, as compared with the case where the oxygen and the water are discharged in a mixed state from the inside of the electrolytic cell 11, the electrolytic performance can be improved, and the necessity of providing the gas-liquid separation mechanism for separating the oxygen and the water outside the electrolytic cell 11 is suppressed, which leads to cost reduction.

### Reference Signs List

1 Electrolyzer
11, 11A, 11B, 11C Electrolytic cell
20 Electrolyte supply unit
27 Ion exchange resin tank
29 Oxygen gas-liquid separator (gas-liquid separator)
30 Power supply unit
41 First separator
41a First inner surface
41r1 First flow path
41r2 Second flow path
42 Second separator
42a Second inner surface
42g Gas discharge port
42h Liquid discharge port
47 Cathode
48 Anode
51 Ion exchange membrane (anion exchange membrane)
51a First surface
51b Second surface
52 Cathode catalyst layer
53 Cathode power feeder
54 Anode catalyst layer
55 Anode power feeder
90 Discharge port
95 Suction device
WS Water surface

## Claims

1. An electrolytic cell, comprising:
a first separator;
a second separator;
an anion exchange membrane disposed between the first separator and the second separator;
a cathode disposed between the first separator and the anion exchange membrane; and
an anode disposed between the second separator and the anion exchange membrane, wherein
the first separator includes a flow path configured to supply an electrolyte to the cathode, and at the cathode, at least part of the electrolyte supplied from the flow path is consumed to generate hydrogen and hydroxide ions, and
the second separator does not include a flow path configured to supply the electrolyte to the anode, and at the anode, oxygen and water are generated by the hydroxide ions that have passed through the anion exchange membrane from the cathode in a state where the electrolyte is not supplied.

2. The electrolytic cell according to claim 1, wherein
the second separator includes a gas discharge port through which the oxygen is mainly discharged and a liquid discharge port through which the water is mainly discharged, and
the gas discharge port and the liquid discharge port are separately provided in the second separator.

3. The electrolytic cell according to claim 2, wherein the liquid discharge port is provided below the gas discharge port.

4. The electrolytic cell according to claim 2 or 3, wherein
an anode chamber is defined between the second separator and the anion exchange membrane,
the gas discharge port is provided above a center of the anode chamber in a vertical direction, and
the liquid discharge port is provided below a center of the anode chamber in a vertical direction.

5. The electrolytic cell according to claim 1,
an anode chamber is defined between the second separator and the anion exchange membrane,
the second separator includes a discharge port through which the oxygen and the water are discharged, and
the discharge port includes a top end formed to be located above a water surface of the water accumulated in the anode chamber in a steady operating state of the electrolytic cell.

6. The electrolytic cell according to claim 1 or 5, wherein
an anode chamber is defined between the second separator and the anion exchange membrane,
the second separator includes a discharge port through which the oxygen and the water are discharged, and
the discharge port is provided at a center or below the center of the anode chamber in a vertical direction.

7. The electrolytic cell according to claim 1 or 2, wherein
the cathode is disposed between the first separator and the anion exchange membrane and includes a cathode power feeder being a mesh structural body, a porous body, or a fiber,
the anode is disposed between the second separator and the anion exchange membrane and includes, an anode power feeder being a mesh structural body, a porous body, or a fiber, and
an average size of a plurality of holes included in the anode power feeder is larger than an average size of a plurality of holes included in the cathode power feeder.

8. The electrolytic cell according to claim 1 or 2, wherein
the cathode is disposed between the first separator and the anion exchange membrane and includes a cathode power feeder being a mesh structural body, a porous body, or a fiber,
the anode is disposed between the second separator and the anion exchange membrane and includes, an anode power feeder being a mesh structural body, a porous body, or a fiber, and
a void ratio of the anode power feeder is larger than a void ratio of the cathode power feeder.

9. The electrolytic cell according to claim 1 or 2, wherein
the cathode is disposed between the first separator and the anion exchange membrane and includes a cathode power feeder being a mesh structural body, a porous body, or a fiber,
the anode is disposed between the second separator and the anion exchange membrane and includes an anode power feeder being a mesh structural body, a porous body, or a fiber, and
a thickness of the anode power feeder is smaller than a thickness of the cathode power feeder in a layering direction in which the first separator and the second separator overlap with each other.

10. The electrolytic cell according to claim 1 or 2, wherein
the first separator includes a first surface facing the second separator,
the first surface includes a first region provided with a plurality of groove portions through which the electrolyte flows,
the second separator includes a second surface facing the first separator,
the second surface includes a second region facing the first region, and
the second region is formed in a planar shape.

11. An electrolyzer, comprising:
an electrolytic cell according to claim 1 or 2;
an electrolyte supply unit configured to supply the electrolyte to the electrolytic cell; and
a power supply unit configured to apply a voltage to the electrolytic cell.

12. The electrolyzer according to claim 11, wherein
the second separator includes
a gas discharge port through which gas generated at the anode is mainly discharged and
a liquid discharge port through which liquid generated at the anode is mainly discharged,
the gas discharge port and the liquid discharge port are separately provided in the second separator, and
the electrolyzer further comprises a gas-liquid separator configured to separate gas contained in the liquid discharged from the liquid discharge port and merge the separated gas with the gas discharged from the gas discharge port.

13. The electrolyzer according to claim 11, further comprising
an ion exchange resin tank into which the water discharged from the second separator flows and which removes at least part of ions contained in the water, and
a pipeline configured to guide the water that has passed through the ion exchange resin tank to be merged with the electrolyte to be supplied to the cathode.

14. The electrolyzer according to claim 11, wherein
the second separator includes a discharge port through which the oxygen and the water are discharged, and
the electrolyzer further comprises a suction device connected to the discharge port and configured to suck the oxygen and the water toward the outside of the electrolytic cell.

15. An electrolytic cell comprising:
a first separator;
a second separator;
an ion exchange membrane disposed between the first separator and the second separator;
a cathode disposed between the first separator and the ion exchange membrane;
an anode disposed between the second separator and the ion exchange membrane, wherein
the first separator includes a flow path configured to supply an electrolyte to the cathode,
the second separator does not include a flow path configured to supply the electrolyte to the anode, and includes
a gas discharge port through which gas generated at the anode is mainly discharged and
a liquid discharge port through which liquid generated at the anode is mainly discharged, and
the gas discharge port and the liquid discharge port are separately provided in the second separator.
